# FASCICULE DE BREVET EUROPEEN

(11) **EP 2 935 959 B1**
(45) Date de publication et mention de la délivrance du brevet: **28.06.2017**
(21) Numéro de dépôt: 13818309.0
(22) Date de dépôt: 16.12.2013
(51) Int. Cl.: F01N 13/00, F02D 9/02, F02D 9/04, F16K 49/00, F02M 26/11, F02M 26/73

(54) **VANNE, NOTAMMENT VANNE DE RECIRCULATION DE GAZ D'ECHAPPEMENT**
VENTIL, INSBESONDERE EIN ABGASRÜCKFÜHRVENTIL
VALVE, PARTICULARLY AN EXHAUST GAS RECIRCULATION VALVE

(30) Priorité: 20.12.2012 FR 1262389
(43) Date de publication de la demande: 28.10.2015
(73) Titulaire: Valeo Systèmes De Contrôle Moteur, 95800 Cergy St Christophe (FR)
(72) Inventeur: GAUTIER, Sylvain, F-95800 Cergy Saint Christophe (FR); RIBERA, Frédéric, F-95800 Cergy Saint Christophe (FR)
(74) Mandataire: Garcia, Christine
(86) Numéro de dépôt international: PCT/FR2013/053097
(87) Numéro de publication internationale: WO 2014/096658

(56) Documents cités:
- EP-A1- 1 605 235
- FR-A1- 2 848 272
- US-A- 3 720 235

## Description

L'invention concerne une vanne. Cette vanne peut être une vanne d'un circuit d'air d'un moteur thermique. Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

Le moteur thermique est par exemple embarqué sur un véhicule automobile.

De manière générale, un système de recirculation des gaz d'échappement d'un moteur à combustion interne permet de diminuer la quantité d'oxydes d'azote présente dans les gaz d'échappement. Classiquement, un tel système de recirculation comporte un canal de dérivation sur la tubulure d'échappement des gaz, ce canal étant équipé d'une vanne de régulation de débit, dite vanne EGR, permettant de renvoyer à l'admission du moteur la quantité désirée de gaz d'échappement.

Une telle vanne est donc parcourue par des gaz qui, même s'ils sont parfois refroidis avant de traverser la vanne, sont de températures très élevées. Il convient en conséquence de refroidir ladite vanne et il est connu en ce sens d'utiliser un liquide de refroidissement passant à travers un réseau de conduits parcourant la vanne.

Pour faire circuler le liquide dans la vanne, on utilise des brides d'entrée et/ou de sortie, comme notamment dans la demande de brevet EP 1 605 235 A1. Elles sont centrées sur les conduits de la vanne avec lesquelles elles communiquent par un fût favorisant la mise en place et le positionnement des brides sur la vanne.

Par ailleurs, il est connu de réaliser de telle vannes par moulage, notamment par injection sous pression. On obtient de la sorte un effet de peau au niveau des surfaces de la pièce, en particulier de ses parois de refroidissement. Ledit effet de peau est favorable à la fiabilité de la pièce. En effet, s'il venait à être affaibli, cela augmenterait la porosité de la pièce et par conséquence les risques de fuite et/ou de corrosion.

Cela étant, l'on souhaite pouvoir ajuster la taille du conduit par usinage pour permettre un positionnement précis de la bride sur la vanne. L'effet de peau obtenu lors du moulage risque alors d'être perdu.

En variante, la vanne peut être une vanne d'un circuit de refroidissement de moteur thermique. Pour une telle vanne, les mêmes problèmes que ceux mentionnés en rapport avec une vanne de circuit d'air de moteur thermique, notamment une vanne EGR, peuvent également se poser.

L'invention propose de remédier à ces problèmes en limitant les surfaces usinées.

L'invention se rapporte ainsi à une vanne comprenant un conduit de circulation d'un fluide de refroidissement muni d'une paroi destinée à venir en contact d'une bride de circulation dudit fluide de refroidissement, ladite paroi présentant une pluralité de rainures et de nervures configurées pour limiter le contact entre ladite bride et ladite paroi au niveau desdites nervures, lesdites nervures étant formées par usinage et lesdites rainures étant issues d'un moulage de la vanne.

Autrement dit, les surfaces les plus en creux, à savoir les rainures ne sont pas celles qui sont usinées mais celles qui sont issues de moulage. Encore autrement dit, les nervures sortent du moule avec une surépaisseur de matière, ensuite usinée, tandis que les rainures sortent directement du moule sans être retravaillées.

On limite de la sorte les surfaces usinées tout en les conservant là où elles sont utiles, à savoir pour le centrage de la bride. On diminue ainsi les altérations de l'effet de peau rencontrées avec l'état de l'art tout en ne sacrifiant pas le positionnement fiable de la bride.

Selon différents modes de réalisation qui pourront être pris ensemble ou séparément :
- ledit conduit présente une direction d'extension longitudinale et lesdites nervures et/ou lesdites rainures s'étendent selon ladite direction d'extension,
- lesdites nervures et lesdites rainures alternent angulairement, perpendiculairement à ladite direction,
- lesdites nervures et/ou lesdites rainures présentent, perpendiculairement à ladite direction, une forme trapézoïdale,
- une grande base desdites nervures est montée dans le prolongement angulaire d'une petite base desdites rainures et/ou une grande base desdites rainures est montée dans le prolongement angulaire d'une petite base desdites nervures. Autrement dit, le long d'un même premier pourtour autour de la direction d'extension, une grande base de nervure peut alterner avec une petite base de rainure tandis que le long d'un même deuxième pourtour autour de la direction d'extension, une petite base de nervure peut alterner avec une grande base de rainure. La distance entre le premier pourtour et le centre du conduit peut être inférieure à celle entre le deuxième pourtour et le centre du conduit, ou inversement.
- lesdites grandes bases des rainures et lesdites petites bases des nervures sont montées en vis-à-vis d'une embouchure dudit conduit,
- ledit conduit comprend un épaulement, ledit épaulement étant formé par une extrémité longitudinale desdites nervures et/ou desdites rainures,
- ladite vanne comprend une partie en saillie d'un corps de ladite vanne au niveau duquel ledit conduit débouche,
- lesdites nervures sont destinées à venir en contact d'un fût de centrage de ladite bride,
- ladite vanne comprend ladite bride,
- ladite bride comprend un fût de centrage dans le conduit de circulation dudit fluide de refroidissement, ledit fût s'étendant selon une direction longitudinale, ledit fût étant parcouru par un canal de circulation dudit fluide de refroidissement s'étendant selon ladite direction longitudinale,
- ledit fût présente un ou des passages permettant une circulation transversale pour le fluide entre ledit conduit de circulation et ledit canal de circulation de ladite bride,
- ledit conduit est avantageusement évasé au droit dudit fût pour créer une chemise de circulation dudit fluide de refroidissement entre ledit fût et la paroi dudit conduit au niveau desdites rainures.

L'invention a encore pour objet, selon un autre de ses aspects, un procédé de fabrication d'une vanne dans lequel :
- on réalise par moulage une vanne comprenant un conduit de circulation d'un fluide de refroidissement muni d'une paroi destinée à venir en contact d'une bride de circulation dudit fluide de refroidissement, ladite paroi présentant à l'issue du moulage une pluralité de rainures et de parties saillantes, et
- on usine les parties saillantes de manière à obtenir des nervures.

On usine par exemple l'extrémité des parties saillantes en regard du conduit, la partie restant des parties saillantes après usinage formant alors les nervures. On passe ainsi des parties saillantes issues du moule aux nervures par enlèvement de matière. Les rainures sortent de leur côté directement du moule sans être retravaillées.

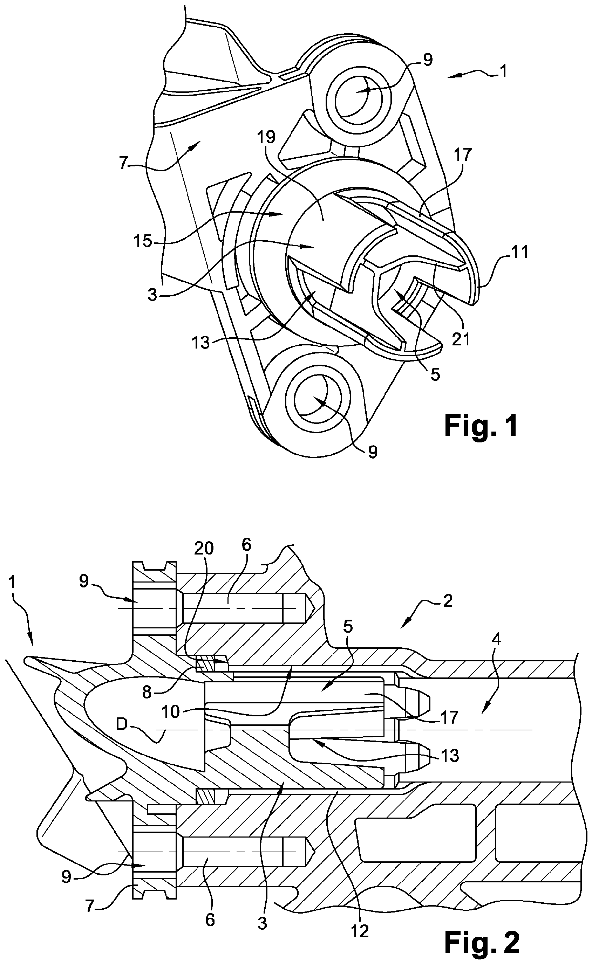

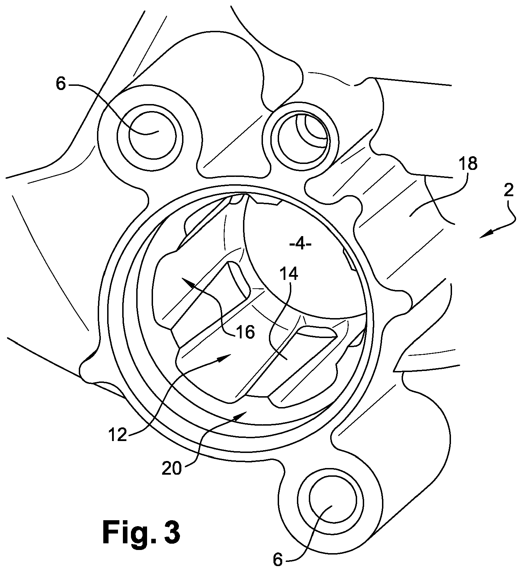

D'autres caractéristiques et avantages de l'invention apparaîtront à la lecture de la description qui suit et qui se rapporte à des exemples détaillés de réalisation, en référence aux figures annexées qui représentent, respectivement :
- en figure 1, une vue en coupe longitudinale illustrant de façon partielle un exemple de vanne conforme à l'invention;
- en figure 2, une vue en perspective, partielle, d'une bride de la vanne de la figure 2;
- en figure 3, une vue en perspective du conduit de la vanne de la figure 2, illustré sans la bride.

Comme illustré à la figure 1, l'invention concerne une vanne. Ladite vanne comprend une structure ou corps 2 en fonderie, notamment en aluminium et/ou alliage d'aluminium. Dans l'exemple qui va être décrit, la vanne est une vanne de recirculation de gaz d'échappement mais l'invention n'est pas limitée à cet exemple.

Dans ce cas, ledit corps 2 comporte un conduit de circulation des gaz, non-visible. Un organe d'obturation de la vanne, telle une soupape ou volet, est configuré pour obturer plus ou moins ledit conduit de circulation des gaz de façon à permettre un réglage de leur débit à travers la vanne. Ladite vanne pourra comprendre des organes cinématiques, telle une pignonnerie à roue dentées, pour l'actionnement du ou desdits organes d'obturation depuis un moteur d'entrainement de la vanne. Elle pourra en outre comprendre des moyens de contrôle, notamment un capteur de positions, desdits organes cinématiques et/ou d'obturation.

De manière à autoriser son refroidissement, ladite vanne comprend un réseau de passage d'un fluide de refroidissement, notamment de l'eau additionnée d'antigel, en particulier de glycol, provenant d'un circuit de refroidissement du véhicule. Ladite vanne comprend au moins un conduit 4 de circulation dudit fluide de refroidissement par lequel celui-ci pénètre dans ladite vanne et/ou sort de ladite vanne. Ledit conduit 4 est muni d'une paroi 10 destinée à venir en contact d'une bride 1 de circulation dudit fluide de refroidissement. Ledit conduit 4 est, par exemple, de section circulaire.

Ladite bride 1 comprend ici un fût 3 de centrage dans ledit conduit de circulation 4 du fluide de refroidissement dans ladite vanne. Ledit fût 3 s'étend selon une direction longitudinale D. Il définit un canal 5 de circulation dudit fluide de refroidissement s'étendant selon ladite direction d'extension D.

Comme cela est plus visible à le figure 2, ledit fût 3 est, par exemple, cylindrique, notamment de section transversale circulaire. Ledit canal de circulation 5 pourra lui aussi être de section circulaire de sorte que ledit fût 3 est formé d'une paroi annulaire 17. Ledit canal 5 débouche selon ladite direction longitudinale D, par exemple, au niveau d'une extrémité distale 11 du fût 3. Ledit fût 3 favorise l'introduction de la bride 1 dans ladite vanne ainsi que son bon positionnement vis-à-vis de celle-ci.

A ce sujet, ladite bride 1 comprend ici une platine 7 de fixation à ladite vanne. Ladite platine 7 est, par exemple, perpendiculaire audit fût 3. Elle pourra comprendre des orifices 9 de passage de vis de fixation, non-illustrées. De son côté, ladite vanne comprend, par exemple, des alésages 6 pour la fixation de ladite bride 1 sur ladite vanne par l'intermédiaire desdites vis.

Par ailleurs ladite vanne pourra comprendre un joint 8 pour l'étanchéité entre ledit conduit 4 de circulation du fluide de refroidissement et l'extérieur de ladite vanne. Ledit joint 8 est situé entre ladite bride 1 et ladite vanne et on comprend que l'étanchéité dépend, notamment, d'un bon positionnement de ladite bride 1 par rapport à ladite vanne.

Ladite bride 1 pourra comprendre, à la base du fût 3, un épaulement 15, configuré pour coopérer avec le joint 8. Ladite bride 1 pourra en outre bien sûr comprendre un ou des orifices de connexion, non-illustrés, au circuit de refroidissement alimentant ladite vanne.

Ledit fût 5 présente avantageusement un ou des passages 13 permettant une circulation transversale pour le fluide entre ledit conduit 4 de circulation de la vanne et ledit canal 5 de circulation de ladite bride 1. Par « transversale », on comprend une direction inclinée par rapport à la direction longitudinale du fût 3.

Ledit fluide de refroidissement est ainsi dirigé non seulement vers l'extrémité distale 11 du fût 3 mais également vers une paroi 10 du conduit de circulation 6 se trouvant latéralement en vis-à-vis dudit fût 3. Ladite paroi 10 pourra en conséquence être elle aussi refroidie. On évite de la sorte la formation de points chauds subissant de forts phénomènes de dilation thermique faisant travailler la matière du corps 2 à proximité de la bride 1 et risquant de nuire à l'étanchéité apportée par ledit joint 8 ainsi qu'à la bonne liaison mécanique entre la bride 1 et ladite vanne au niveau desdits alésages 6.

Le ou lesdits passages 13 sont situés, par exemple, entre ledit épaulement 15 et ladite extrémité distale 11 du fût 3. Le ou lesdits passages 13 sont ici des fentes s'étendant selon la direction d'extension longitudinale du fût, lesdites fentes 13 étant ouvertes longitudinalement à l'extrémité distale 11 du fût 3. La ou lesdites fentes 13 sont ici au nombre de trois, régulièrement espacés. Lesdites fentes 13 sont séparées par des branches 19 dudit fût 3 s'étendant angulairement entre deux fentes 13 voisines dudit fût. Autrement dit, lesdites fentes 13 sont formées par des interruptions de la paroi annulaire 17 dudit fût 3. Ladite paroi annulaire 17 est ici définie par lesdites branches 19 qui sont prévues saillantes de l'épaulement 15. L'extrémité distale 11 du fût 3 est définie par une extrémité distale desdites branches 19.

Ledit fût 3 est avantageusement muni de nervures 21 de renfort, disposées dans ledit canal 5 de circulation du fût 3 entre les branches 19. Lesdites nervures de renfort 21 sont orientées, par exemple, selon la direction d'extension longitudinale D dudit fût 3, en particulier radialement. Elles sont ici au nombre de trois et disposées en étoile depuis la direction longitudinale dudit canal 5. Elles divisent de la sorte ledit canal 5 en trois sous canaux de passage du fluide de refroidissement.

Comme cela est plus visible à la figure 3, selon l'invention, ladite paroi 10 présente une pluralité de rainures 16 et de nervures 14 configurées pour limiter le contact entre ladite bride 1, en particulier ledit fût 3, et ladite paroi 10 au niveau desdites nervures 14. Autrement dit, ledit fût 3 est seulement au contact desdites nervures 14 mais pas des rainures 16. Lesdites nervures 14 sont formées par usinage et lesdites rainures 16 sont issues d'un moulage de la vanne. On limite de la sorte les pertes d'effet de peau tout en conservant un bon guidage de la bride.

Ledit conduit 4 présente avantageusement une direction d'extension longitudinale et lesdites nervures 14 et/ou lesdites rainures 16 s'étendent selon ladite direction d'extension, notamment en alternant angulairement. On observe ici six nervures 14 et six rainures 16. L'envergure annulaire des rainures 16 pourra être plus grande que l'envergure annulaire des nervures 14. L'extension longitudinale des nervures 14 à l'intérieur dudit conduit 4 est ici plus grande que celle dudit fût 3.

Lesdites nervures 14 et/ou lesdites rainures 16 pourront présenter une forme trapézoïdale, une grande base desdites nervures 14 étant montée dans le prolongement angulaire d'une petite base desdites rainures 16 tandis qu'une grande base desdites rainures 16 est montée dans le prolongement angulaire d'une petite base desdites nervures 14. Une extrémité longitudinale desdites nervures 14 et/ou desdites rainures 16, en particulier lesdites grandes bases des rainures 16 et lesdites petites bases des nervures 16 sont montées en vis-à-vis d'une embouchure dudit conduit 4.

Ledit conduit 4 comprend avantageusement un épaulement annulaire 20, ledit épaulement 20 étant formé par une extrémité longitudinale desdites nervures 14 et/ou desdites rainures 16. Un autre épaulement 30 pourra encore être prévu à l'autre extrémité longitudinale desdites nervures 16.

Comme cela est plus visible à la figure 2, ledit conduit 4 est, par exemple, évasée au droit dudit fût 3 pour créer une chemise 12 de circulation dudit fluide de refroidissement entre ledit fût 3 et la paroi 10 dudit conduit 4, au niveau desdites rainures 14.

On constate également à la figure 3 que ladite vanne pourra comprendre une partie en saillie 18 du reste de son corps 2 au niveau de laquelle sont formés l'embouchure dudit conduit de circulation 4 et/ou lesdits alésages 6.

## Revendications

1. Vanne, notamment vanne de recirculation de gaz d'échappement, ladite vanne comprenant un conduit (4) de circulation d'un fluide de refroidissement muni d'une paroi (10) destinée à venir en contact d'une bride (1) de circulation dudit fluide de refroidissement, ladite paroi (10) présentant une pluralité de rainures (16) et de nervures (14) configurées pour limiter le contact entre ladite bride (1) et ladite paroi (10) au niveau desdites nervures (14), lesdites nervures (14) étant formées par usinage et lesdites rainures (16) étant issues d'un moulage de la vanne.

2. Vanne selon la revendication 1, ledit conduit (10) présentant une direction d'extension longitudinale et lesdites nervures (14) et/ou lesdites rainures (16) s'étendant selon ladite direction d'extension.

3. Vanne selon la revendication 2, lesdites nervures (14) et lesdites rainures (16) alternant angulairement dans un plan perpendiculaire à ladite direction d'extension.

4. Vanne selon la revendication 2 ou 3, lesdites nervures (14) et/ou lesdites rainures (16) présentant une forme trapézoïdale dans un plan perpendiculaire à ladite direction d'extension.

5. Vanne selon l'une quelconque des revendications 2 à 4, une extrémité longitudinale desdites nervures (14) et/ou desdites rainures (16) étant montée en vis-à-vis d'une embouchure dudit conduit (4).

6. Vanne selon l'une quelconque des revendications 2 à 5, ledit conduit (4) comprenant un épaulement (20), ledit épaulement (20) étant formé par une extrémité longitudinale desdites nervures (14) et/ou desdites rainures (16).

7. Vanne selon l'une quelconque des revendications précédentes, comprenant une partie (18) en saillie d'un corps de ladite vanne au niveau duquel ledit conduit (4) débouche.

8. Vanne selon l'une quelconque des revendications précédentes, lesdites nervures (14) étant destinées à venir en contact d'un fût de centrage (3) de ladite bride (1).

9. Vanne selon l'une quelconque des revendications précédentes, comprenant ladite bride (1).

10. Procédé de fabrication d'une vanne, dans lequel :
- on réalise par moulage une vanne comprenant un conduit (4) de circulation d'un fluide de refroidissement muni d'une paroi (10) destinée à venir en contact d'une bride (1) de circulation dudit fluide de refroidissement, ladite paroi (10) présentant à l'issue du moulage une pluralité de rainures (16) et de parties saillantes, et
- on usine les parties saillantes de manière à obtenir des nervures (14).

## Patentansprüche

1. Ventil, insbesondere Abgasrückführventil, wobei das Ventil einen Kanal (4) zur Zirkulation eines Kühlfluids umfasst, der mit einer Wand (10) ausgestattet ist, die dazu bestimmt ist, mit einem Flansch (1) zur Zirkulation des Kühlfluids in Kontakt zu kommen, wobei die Wand (10) mehrere Rillen (16) und Rippen (14) aufweist, die dafür ausgelegt sind, den Kontakt zwischen dem Flansch (1) und der Wand (10) an den Rippen (14) zu begrenzen, wobei die Rippen (14) durch Bearbeitung ausgebildet sind und die Rillen (16) aus einem Formen des Ventils hervorgegangen sind.

2. Ventil nach Anspruch 1, wobei der Kanal (10) eine longitudinale Erstreckungsrichtung aufweist und die Rippen (14) und/oder die Rillen (16) sich entlang dieser Erstreckungsrichtung erstrecken.

3. Ventil nach Anspruch 2, wobei die Rippen (14) und die Rillen (16) in einer zu der Erstreckungsrichtung senkrechten Ebene winkelmäßig abwechselnd angeordnet sind.

4. Ventil nach Anspruch 2 oder 3, wobei die Rippen (14) und/oder die Rillen (16) in einer zu der Erstreckungsrichtung senkrechten Ebene eine Trapezform aufweisen.

5. Ventil nach einem der Ansprüche 2 bis 4, wobei ein Längsende der Rippen (14) und/oder der Rillen (16) gegenüber einer Mündung des Kanals (4) angebracht ist.

6. Ventil nach einem der Ansprüche 2 bis 5, wobei der Kanal (4) einen Absatz (20) aufweist, wobei der Absatz (20) von einem Längsende der Rippen (14) und/oder der Rillen (16) gebildet wird.

7. Ventil nach einem der vorhergehenden Ansprüche, welches einen von einem Körper des Ventils vorstehenden Teil (18) umfasst, an welchem der Kanal (4) mündet.

8. Ventil nach einem der vorhergehenden Ansprüche, wobei die Rippen (14) dazu bestimmt sind, mit einer Zentrierhülse (3) des Flansches (1) in Kontakt zu kommen.

9. Ventil nach einem der vorhergehenden Ansprüche, welches den Flansch (1) umfasst.

10. Verfahren zur Herstellung eines Ventils, wobei:
- durch Formen ein Ventil hergestellt wird, das einen Kanal (4) zur Zirkulation eines Kühlfluids umfasst, der mit einer Wand (10) ausgestattet ist, die dazu bestimmt ist, mit einem Flansch (1) zur Zirkulation des Kühlfluids in Kontakt zu kommen, wobei die Wand (10) am Ende des Formens mehrere Rillen (16) und vorstehende Teile aufweist,
- die vorstehenden Teile so bearbeitet werden, dass Rippen (14) erhalten werden.

## Claims

1. Valve, notably an exhaust gas recirculation valve, said valve comprising a duct (4) for the circulation of a coolant provided with a wall (10) intended to come into contact with a flange (1) for circulation of said coolant, said wall (10) having a plurality of grooves (16) and of ribs (14) which are configured to limit contact between said flange (1) and said wall (10) in the region of said ribs (14), said ribs (14) being formed by machining and said grooves (16) originating from a molding of the valve.

2. Valve according to Claim 1, said duct (10) having a longitudinal direction of extension and said ribs (14) and/or said grooves (16) extending in said direction of extension.

3. Valve according to Claim 2, said ribs (14) and said grooves (16) alternating angularly in a plane perpendicular to said direction of extension.

4. Valve according to Claim 2 or 3, said ribs (14) and/or said grooves (16) having a trapezoidal shape in a plane perpendicular to said direction of extension.

5. Valve according to any one of Claims 2 to 4, one longitudinal end of said ribs (14) and/or of said grooves (16) being mounted facing a mouth of said duct (4).

6. Valve according to any one of Claims 2 to 5, said duct (4) comprising a shoulder (20), said shoulder (20) being formed by a longitudinal end of said ribs (14) and/or of said grooves (16).

7. Valve according to any one of the preceding claims, comprising a part (18) projecting from a body of said valve in the region of which said duct (4) opens.

8. Valve according to any one of the preceding claims, said ribs (14) being intended to come into contact with a centering barrel (3) of said flange (1).

9. Valve according to any one of the preceding claims, comprising said flange (1).

10. Method of manufacturing a valve in which:
- molding is used to create a valve comprising a duct (4) for the circulation of a coolant provided with a wall (10) intended to come into contact with a flange (1) for the circulation of said coolant, said wall (10) having, at the end of molding, a plurality of grooves (16) and of protruding parts, and
- the protruding parts are machined in order to obtain ribs (14).
